Europäisches Patentamt

European Patent Office

Office européen des brevets

(19)

(11) **EP 1 107 230 B1**

(12) **FASCICULE DE BREVET EUROPEEN**

(45) Date de publication et mention
de la délivrance du brevet:
**11.08.2004  Bulletin 2004/33**

(51) Int Cl.⁷: **H04M 3/56**, G10L 19/02

(21) Numéro de dépôt: **00403270.2**

(22) Date de dépôt: **22.11.2000**

(54) **Procédé de traitement de plusieurs flux binaires de données audio**

Verfahren zur Verarbeitung mehrerer digitaler Audiodatenströme

Method of processing multiple digital audio data streams

(84) Etats contractants désignés:
**DE FR GB IT**

(30) Priorité:  **08.12.1999  FR 9915574**

(43) Date de publication de la demande:
**13.06.2001  Bulletin 2001/24**

(73) Titulaire: **FRANCE TELECOM SA**
**75015 Paris (FR)**

(72) Inventeurs:
• **Benjelloun Toumi, Abdellatif France Télécom SA**
**92794 Issy les Moulineaux Cedex 9 (FR)**

• **Mahieux, Yannick**
**22140 Tonquedec (FR)**
• **Lamblin, Claude**
**22700 Perros-Guirec (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
EP-A- 0 475 196            EP-A- 0 617 537
GB-A- 2 321 577            US-A- 5 400 433
US-A- 5 570 363

## EP 1 107 230 B1

**Description**

La présente invention concerne un procédé de traitement d'au moins un flux binaire audio codé organisé sous la forme de trames. Ce ou ces flux sont obtenus par des algorithmes, d'une part, de codage de type fréquentiel exploitant les caractéristiques psychoacoustiques de l'oreille humaine pour la réduction du débit et, d'autre part, de quantification des signaux ainsi codés. La présente invention trouve particulièrement application lorsqu'aucune donnée d'allocation des bits mise en oeuvre lors de la quantification n'est présente explicitement dans les flux audio considérés.

Un tel procédé peut être utilisé pour transposer un flux audio codé à un premier débit vers un autre flux à second débit. Il peut également être utilisé pour combiner entre eux plusieurs flux audio codé, par exemple dans un système de téléconférence audio.

Une application possible du procédé de la présente invention concerne la téléconférence, principalement, dans le cas d'une architecture de communication centralisée basée sur une unité de contrôle multipoint (Multipoint Control Unit : MCU) qui joue, entre autres, le rôle d'un pont audio qui effectue la combinaison (ou mixage) des flux audio puis leur routage vers les terminaux concernés.

On notera cependant que le procédé de la présente invention peut être appliqué à un système de téléconférence dont l'architecture est maillée avec des terminaux qui sont alors en liaison point à point.

D'autres applications sont envisageables, notamment dans d'autres contextes multimédia. C'est le cas par exemple de la consultation de serveurs de base de données contenant des objets audio pour construction de scènes virtuelles.

Le montage et l'édition sonore, qui consistent en la manipulation d'un ou de plusieurs flux binaires comprimés pour en produire un nouveau, constituent aussi un domaine d'application du procédé de la présente invention.

Un des principaux problèmes qui est à résoudre pour le traitement de flux audio codés est celui de la réduction du coût de calcul que ce traitement représente. Généralement, ces traitements sont mis en oeuvre dans le domaine temporel si bien qu'il est nécessaire d'effectuer une transformée des flux audio du domaine fréquentiel vers le domaine temporel, puis, après traitement des flux temporels, effectuer une transformée inverse du domaine temporel vers le domaine fréquentiel. Il résulte de ces transformées un retard algorithmique et un coût de calcul importants qui peuvent s'avérer gênants.

En particulier, dans le cas de la téléconférence, on a cherché à réduire le délai global de la communication et donc d'améliorer sa qualité en terme d'interactivité. On notera que les problèmes évoqués ci-dessus sont encore plus ardus, dans le cas de la téléconférence, du fait du nombre d'accès élevés que peut offrir une unité de contrôle multipoint.

Pour la téléconférence, les flux audio peuvent être codés au moyen de plusieurs types d'algorithmes de codage normalisés. Ainsi la norme H.320, spécifique à la transmission sur le RNIS à bande étroite, indique plusieurs algorithmes de codage (G.711, G.722, G.728). De même, la norme H.323 indique en plus plusieurs algorithmes de codage (G.723.1, G.729 et MPEG-1).

Par ailleurs, en contexte de téléconférence haute qualité, la norme G.722 prévoit un algorithme de codage qui opère sur une largeur de bande de 7 kHz et par subdivision du spectre en deux sous-bandes. Un codage du type MICDA est alors effectué sur le signal de chaque bande.

Pour résoudre le problème du retard et de la complexité introduits par les bancs de filtres miroirs en quadrature, au niveau de l'unité de contrôle multipoint, la norme G.722 spécifie dans son annexe une méthode de recombinaison directe à partir des signaux des sous-bandes. Cette méthode consiste à réaliser un décodage MICDA des deux échantillons respectivement issus des sous-bandes de chaque trame d'entrée de l'unité de contrôle multipoint, à faire la sommation sur l'ensemble des voies d'entrée considérées, et enfin à effectuer un codage MICDA avant de construire la trame de sortie.

Une des solutions proposées pour diminuer la complexité consiste à restreindre le nombre de décodeurs au niveau de l'unité de contrôle multipoint et donc à n'effectuer la combinaison des flux audio codés que sur une partie seulement des flux reçus. Plusieurs stratégies existent pour déterminer les voies d'entrée à considérer. Par exemple, la combinaison est faite sur les N' signaux ayant les gains les plus forts, où N'est prédéfini et fixe, et où le gain est lu directement à partir des mots de code d'entrée. Par exemple encore, la combinaison n'est réalisée que sur les flux actifs si bien que le nombre d'entrées prises en compte est alors variable.

On notera que ces méthodes n'apportent pas de solutions au problème de la réduction du retard.

Une autre application du procédé de la présente invention est la transposition d'un flux de signaux audio codés à un premier débit vers un autre flux à un second débit.

Une telle application est intéressante lors de la transmission à travers différents réseaux hétérogènes où l'on doit adapter le débit à la bande passante fournie par le milieu de transmission utilisé. C'est le cas des réseaux à qualité de service non garantie (ou non fiable) où l'allocation de bande passante dépend des conditions de trafic. Un exemple type se présente lors du passage d'un environnement Intranet (réseau local Ethernet à 10 Mbits/s par exemple), où la limitation en bande passante est moins sévère, à un réseau plus saturé (Internet). La nouvelle norme de téléconférence H.323 qui permet une interopérabilité entre terminaux sur différents types de réseaux (RLE à QoS non garantie, RNIS-BE, RNIS-LB, RTGC, ...) constitue aussi un champs d'application. Un autre cas de figure intéressant se présente lors de la consultation de serveurs audio (Audio à la demande par exemple). En effet, les données audio sont souvent stockées sous forme codée mais avec un taux de compression suffisamment faible pour conserver une haute qualité, la transmission sur réseau pouvant nécessiter une autre réduction du débit.

On connaît également le procédé qui est décrit dans le document US-A-5 570 363. Ce procédé est un procédé pour le traitement d'au moins un flux audio numérique codé organisé sous la forme de trames créés à partir de signaux audio numériques qui ont été codés par au moins un terminal audio afin de délivrer des trames traitées qui sont alors fournies à une étape d'utilisation ultérieure, ledit codage desdits signaux audio numériques comprenant une étape de transformation du domaine temporel au domaine fréquentiel afin de calculer des coefficients de transformée, puis une quantification et un codage des coefficients de transformée selon un jeu de quantificateurs.

Le problème que cherche à résoudre l'invention est de traiter différents flux numériques audio pouvant être quantifiés avec des quantificateurs différents. La solution qui est décrite est de créer des classes qui sont en relation avec l'ensemble de quantificateurs utilisé lors du codage, de ne pas déquantifier et de ne réaliser le traitement qu'avec des signaux d'une même classe. Ces classes sont des paramètres prédéterminés du système mais ne sont pas des paramètres spécifiques au signal à traiter. Il résulte d'un tel procédé un certain manque de souplesse puisque deux flux pourront être traités seulement s'ils appartiennent à la même classe. La présente invention a pour but de résoudre ce problème particulier.

A cet effet, un procédé selon la présente invention, telle que definie par les revendications indépendantes ci-jointes, est caractérisé en ce que

- le jeu de quantificateurs est déterminé à partir de paramètres de sélection extraits desdits signaux audio numériques, lesdites trames contenant en outre lesdits paramètres de sélection, et en ce que ledit procédé comprend, pour au moins un flux audio reçu d'un terminal, les étapes suivantes de :
- obtention des paramètres de sélection à partir desdites trames dudit flux audio et détermination à partir desdits paramètres de sélection du jeu de quantificateurs qui avaient été utilisés durant l'étape de quantification réalisé par ledit terminal,
- décodage partiel et déquantification desdites trames en utilisant le jeu de quantificateurs déterminé à l'étape précédente afin de recouvrir les valeurs déquantifiées des coefficients de transformée qui avaient été calculés par ledit terminal,
- mise en oeuvre dudit traitement proprement dit dans le domaine fréquentiel sur les coefficients de transformée déquantifiés obtenus à l'étape précédente afin de produire des trames traitées,
- délivrance desdites trames traitées à ladite étape d'utilisation ultérieure.

Le but de la présente invention est de proposer un procédé de traitement d'au moins un flux de signaux audio codés qui permettent de résoudre les problèmes évoqués ci-dessus.

Elle concerne donc un procédé de traitement d'au moins un flux binaire audio codé organisé sous la forme de trames formées à partir de signaux audio numériques qui ont été codés en les soumettant, d'abord, à une transformée du domaine temporel vers le domaine fréquentiel afin de calculer des coefficients de transformée puis à une étape de quantification et codage desdits coefficients de transformée selon un jeu de quantificateurs déterminé à partir de paramètres de sélection extraits desdits signaux audio numériques, lesdits paramètres de sélection étant également présents dans lesdites trames.

Selon une caractéristique essentielle de la présente invention, ledit procédé comprend, afin de recouvrir lesdits coefficients de transformée issus du codage, une étape de détermination, à partir desdits paramètres de sélection contenus dans lesdites trames du ou de chaque flux binaire audio codé, du jeu de quantificateur utilisé lors de l'étape de quantification, une étape de décodage partiel consistant à décoder puis à déquantifier ledit ou chaque flux binaire audio codé en utilisant ledit jeu de quantificateurs déterminé ainsi déterminé afin de recouvrir lesdits coefficients de transformée issus du codage, une étape de traitement dans le domaine fréquentiel des coefficients de transformée ainsi recouvrés afin de fournir à une étape ultérieure d'utilisation lesdites trames traitées.

Selon un premier mode de mise en oeuvre, ladite étape ultérieure d'utilisation consiste à recoder partiellement lesdites trames ainsi traitées en une étape de re-quantification et re-codage desdits coefficients de transformée ainsi traités.

Selon une autre caractéristique de l'invention, ledit traitement consiste à sommer les coefficients de transformée issus du décodage partiel de chacun desdits flux de trames et à fournir, à l'étape de re-codage, le résultat de ladite sommation.

La présente invention concerne également un procédé tel qu'il vient d'être décrit mais qui est destiné à être mis en oeuvre dans un système d'audioconférence à plusieurs terminaux. Ledit traitement consiste alors à sommer les coefficients de transformée respectivement issus des décodages partiels desdits flux de trames en provenance desdits terminaux et à fournir, à l'étape de re-codage affecté à un terminal, le résultat de ladite sommation auquel sont soustraits les coefficients de transformée issus du décodage partiel du flux de trames en provenance dudit terminal.

Selon un autre mode de mise en oeuvre de l'invention, le procédé de la présente invention est caractérisé en ce que ladite étape ultérieure d'utilisation est une étape de transformée du domaine fréquentiel vers le domaine temporel en vue de la restitution du signal audio. Un tel procédé est par exemple mis en oeuvre dans un système d'audioconférence à plusieurs terminaux. Il est alors caractérisé en ce que ledit traitement consiste à sommer les coefficients de transformée respectivement issus des décodages partiels desdits flux de trames en provenance desdits terminaux.

Selon une autre caractéristique de l'invention, les valeurs desdits paramètres de sélection du jeu de quantificateurs sont également soumises audit traitement.

Lorsque lesdits paramètres de sélection du jeu de quantificateurs contenus dans lesdites trames audio du flux ou de chaque flux sont des valeurs des énergies des signaux audio dans des bandes de fréquence prédéterminées, ensemble dit enveloppe spectrale, ledit traitement consiste par exemple à sommer les coefficients de transformée issus du décodage partiel de chacun desdits flux de trames et à fournir, à l'étape de re-codage, le résultat de ladite sommation puis à déterminer l'énergie totale dans chaque bande de fréquence par sommation des énergies des trames et à fournir, à l'étape de re-codage, le résultat de ladite sommation.

Mis en oeuvre dans un système d'audioconférence à plusieurs terminaux, un tel procédé est caractérisé en ce que ledit traitement consiste à sommer les coefficients de transformée issus du décodage partiel de chacun desdits flux de trames respectivement en provenance desdits terminaux et à fournir, à l'étape de re-codage affecté à un terminal, le résultat de ladite sommation auquel sont soustraits les coefficients de transformée issus du décodage partiel du flux de trames en provenance dudit terminal et en ce qu'il consiste à déterminer l'énergie totale dans chaque bande de fréquence par sommation des énergies des trames en provenance desdits terminaux et à fournir, à l'étape de re-codage affecté à un terminal, le résultat de ladite sommation auquel est soustraite l'énergie issue de la trame en provenance dudit terminal.

Selon une autre caractéristique de l'invention, dans lequel lesdites trames audio du flux ou de chaque flux contiennent une information de voisement du signal audio correspondant, ledit traitement détermine alors l'information de voisement du signal audio résultant dudit traitement. Pour déterminer cette information de voisement du signal audio résultant dudit traitement, ledit procédé peut par exemple consister, si toutes les trames de tous les flux ont le même état de voisement, à considérer cet état de voisement comme l'état du signal audio résultant dudit traitement, et, dans le cas contraire, à déterminer l'énergie totale de l'ensemble des signaux audio des trames voisées et l'énergie de l'ensemble des signaux audio des trames non-voisées, puis à considérer l'état de voisement de l'ensemble dont l'énergie est la grande comme étant l'état de voisement du signal audio résultant dudit traitement.

Lorsque lesdites trames audio du flux ou de chaque flux contiennent une information de tonalité du signal audio correspondant, ledit traitement peut déterminer, si toutes les trames sont de même nature, l'information de tonalité du signal audio résultant dudit traitement comme étant l'état des signaux desdites trames.

Selon une autre caractéristique de l'invention, ledit procédé consiste à chercher parmi toutes les trames à traiter celle qui a l'énergie maximale dans une bande donnée, et égaler les coefficients de la trame de sortie au coefficient de ladite trame dans ladite bande si les coefficients des trames d'entrée autres que celle qui a énergie maximale dans une bande donnée sont masqués par le seuil de masquage de ladite trame dans ladite bande. Les énergies de la trame de sortie dans ladite bande ont par exemple égalées à l'énergie maximale de ladite trame d'entrée dans ladite bande.

Selon une autre caractéristique de l'invention, lorsque ladite étape de re-quantification est une quantification vectorielle à dictionnaires imbriqués en taille, le mot de code de la bande en sortie est égal au mot de code de la bande en entrée, si le dictionnaire correspondant en entrée à la bande est inclus dans le dictionnaire sélectionné en sortie, ou dans le cas contraire où le dictionnaire de sortie est inclus dans le dictionnaire d'entrée mais que le vecteur quantifié, élément du dictionnaire d'entrée est aussi un élément du dictionnaire de sortie, sinon le processus de quantification inverse puis re-quantification dans le dictionnaire de sortie est mis en oeuvre.

Par exemple ladite étape de re-quantification est une quantification vectorielle à dictionnaires imbriqués en taille, les dictionnaires étant composés d'union de codes à permutation. Alors, si le dictionnaire correspondant en entrée à la bande est inclus dans le dictionnaire sélectionné en sortie, ou dans le cas contraire où le dictionnaire de sortie est inclus dans le dictionnaire d'entrée mais que le vecteur quantifié, élément du dictionnaire d'entrée est aussi un élément du dictionnaire de sortie, le mot de code de la bande en sortie est égal au mot de code de la bande en entrée, sinon le processus de quantification inverse puis re-quantification dans le dictionnaire de sortie est mis en oeuvre, la procédure de requantification étant avantageusement accélérée en ce que le plus proche voisin du leader d'un vecteur du dictionnaire d'entrée est un leader du dictionnaire de sortie.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un schéma synoptique d'un système de téléconférence à architecture centralisée qui est prévu pour mettre en oeuvre un procédé selon la présente invention,

La Fig. 2 est un schéma synoptique d'une unité de codage dans le domaine fréquentiel exploitant les caractéristiques psychoacoustiques de l'oreille humaine,

La Fig. 3 est un schéma synoptique d'une unité de codage utilisée dans une source de signaux audio codés, tel qu'un terminal d'un système de téléconférence,

La Fig. 4 un schéma synoptique d'une unité de décodage partiel utilisée pour la mise en oeuvre d'un procédé selon la présente invention,

La Fig. 5 est un schéma synoptique d'une unité de recodage partiel utilisée pour la mise en oeuvre d'un procédé selon la présente invention,

La Fig. 6 est un schéma synoptique d'une unité de traitement prévue pour mettre en oeuvre le procédé de la présente invention, et

La Fig. 7 est un schéma synoptique d'un système de téléconférence à architecture maillée qui met en oeuvre un procédé selon la présente invention.

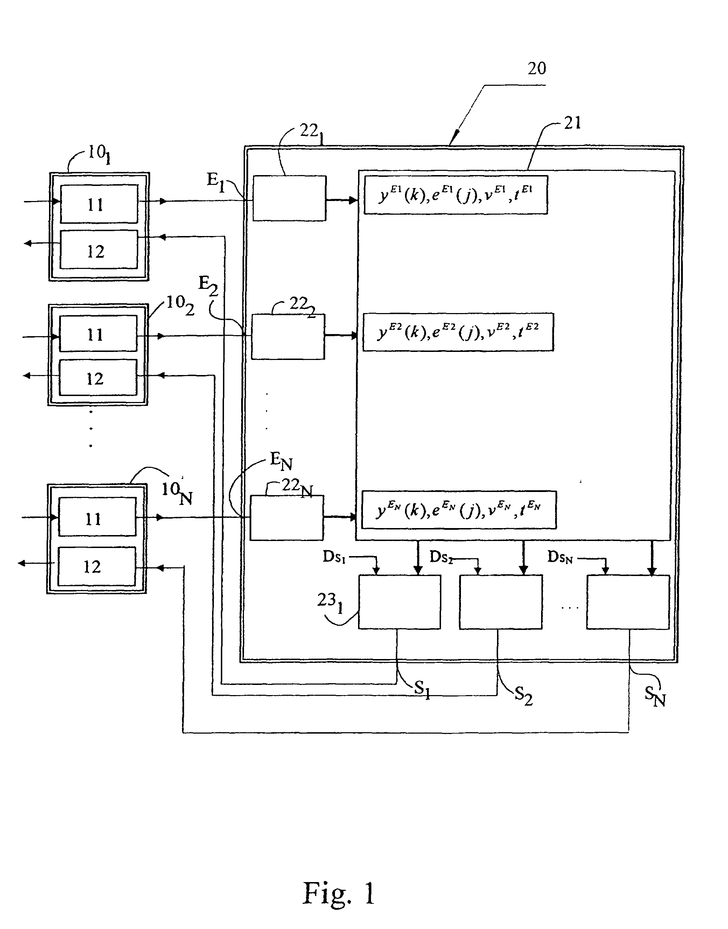

Le système d'audioconférence représenté à la Fig. 1 est essentiellement constitué de N terminaux $10_1$ à $10_N$ respectivement reliés à une unité de contrôle multipoint (MCU = Multipoint Control Unit) 20.

Plus précisément, chaque terminal 10 est constitué d'un codeur 11 dont l'entrée reçoit les données audio à transmettre aux autres terminaux et dont la sortie est reliée à une entrée de l'unité de contrôle multipoint 20. Chaque terminal 10 comporte encore un décodeur 12 dont l'entrée est reliée à une sortie de l'unité de contrôle multipoint 20 et dont la sortie délivre les données qui sont transmises au terminal considéré par les autres terminaux.

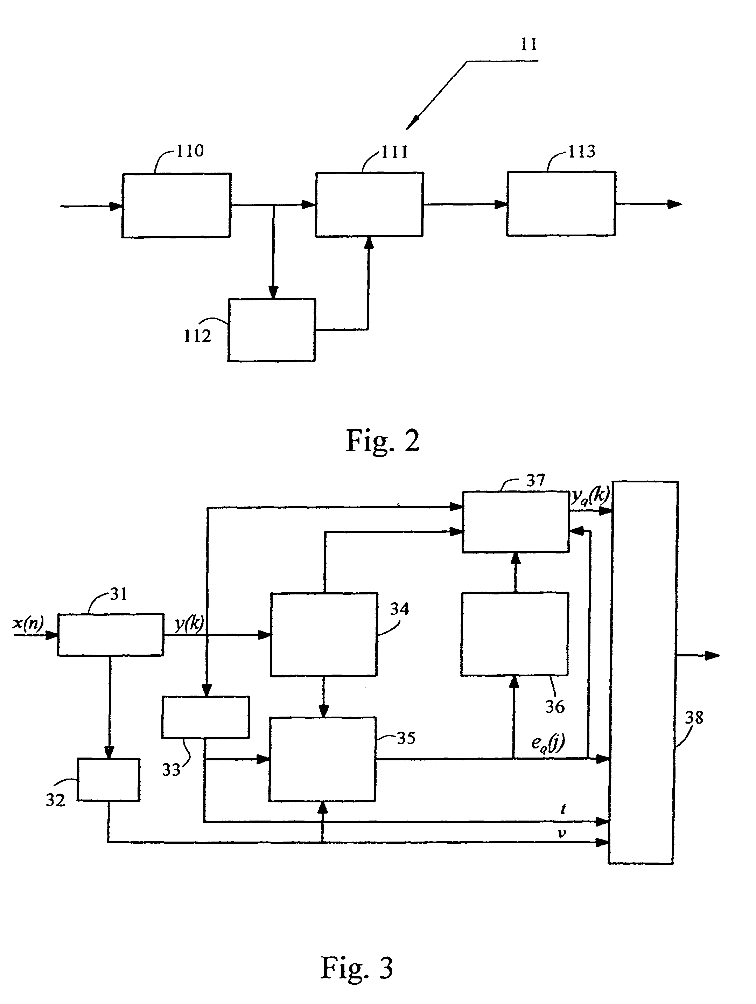

Généralement, le codeur 11, tel que celui qui est représenté à la Fig. 2, est du type fréquentiel perceptuel. Il comporte alors, d'une part, une unité 110 prévue pour soumettre les données d'entrée à une transformée du domaine temporel vers le domaine fréquentiel et, d'autre part, une unité de quantification et codage 111 pour assurer la quantification puis le codage des coefficients issus de la transformée effectuée par l'unité 110.

Généralement, la quantification est réalisée selon un jeu de quantificateurs, chaque quantificateur dépendant, par exemple, d'un certain nombre de valeurs qui sont extraites, par une unité 112, des signaux à coder. Ces valeurs constituent des paramètres de sélection du jeu de quantificateurs.

Enfin, les coefficients quantifiés et codés sont formatés sous la forme de trames audio par une unité 113.

On notera que, comme on le verra par la suite, le codeur 11 peut également délivrer des données concernant les valeurs constituant les paramètres de sélection des quantificateurs. On notera que ces valeurs peuvent concerner les énergies des signaux audio dans des bandes de fréquences prédéterminées, formant entre elles une enveloppe spectrale des signaux audio d'entrée.

Le codeur 11 peut également émettre des données d'informations de voisement et des données d'informations de tonalité.

Par contre, dans le cadre de la présente invention, le codeur 11 ne délivre pas d'informations explicites concernant les quantificateurs utilisés par le processus de quantification et codage effectué par l'unité 111.

Quant au décodeur 12 de chaque terminal 10, il est prévu pour effectuer les opérations inverses de celles effectuées par le codeur 11. Il est donc prévu pour déquantifier (opération de quantification inverse) les coefficients contenus dans les trames audio reçues de l'unité de contrôle multipoint 20 et pour effectuer ensuite la transformée inverse de celle effectuée par le codeur 11 afin de délivrer des données dans le domaine temporel. L'étape de déquantification nécessite la connaissance des quantificateurs utilisés lors du processus de quantification, cette connaissance étant réalisée par les valeurs des paramètres de sélection présentes dans la trame. Elle peut également utiliser les informations de voisement et les informations de tonalité des données reçues de l'unité de contrôle multipoint 20.

L'unité de contrôle multipoint 20 selon la présente invention et représentée à la Fig. 1 est essentiellement constituée d'une unité de combinaison 21 qui est prévue pour effectuer la combinaison des signaux présents sur ses entrées et pour délivrer à l'entrée du décodeur 12 d'un terminal $10_m$ la somme des signaux respectivement délivrés par tous les codeurs 11 des $N$ terminaux à l'exception du signal issu du terminal $10_m$.

Plus précisément, l'unité de contrôle multipoint 20 comporte encore $N$ décodeurs partiels $22_1$ à $22_n$ prévus pour respectivement recevoir les trames audio engendrées par les terminaux $10_1$ à $10_n$, pour les décoder et ainsi les délivrer aux entrées de l'unité de combinaison 21. L'unité de contrôle multipoint 20 comporte $N$ recodeurs $23_1$ à $23_n$ dont les sorties sont respectivement reliées aux entrées des décodeurs 12 des terminaux $10_1$ à $10_N$ et dont les entrées sont respectivement reliées à des sorties de l'unité de combinaison 21.

Selon l'invention, le décodage effectué par chaque décodeur 22 est un décodage partiel qui consiste essentiellement à extraire les informations essentielles contenues dans les trames audio qui sont présentes sur son entrée, et ainsi délivrer les coefficients de transformée dans le domaine fréquentiel.

Eventuellement, chaque décodeur 22 délivre également l'ensemble des valeurs de paramètres de sélection de quantificateur, tel que l'enveloppe spectrale, ainsi que les informations de voisement et de tonalité à l'unité de combinaison 21.

Par souci de simplification, dans la suite de la description, on ne considérera que l'enveloppe spectrale mais on comprendra que la présente invention s'applique également pour tout type d'ensemble de valeurs de paramètres permettant de sélectionner les quantificateurs à utiliser ou utilisés par le processus concerné.

Sur la Fig. 1, on a noté $y^{Em}$ (k) le coefficient de transformée de rang $k$ de la trame présente sur l'entrée $E_m$ reliée au terminal $10_m$, $e^{Em}$ (j) l'énergie du signal audio correspondant à la trame qui est présente sur l'entrée $E_m$ dans la bande de fréquence d'indice $j$, $v^{Em}$ l'information de voisement de ce signal et $t^{Em}$ l'information de tonalité également de ce signal. On nommera par la suite "enveloppe spectrale" l'ensemble des énergies $e^{E}_m$ (j) pour toutes les bandes $j$ variant de 1 à $M$, $M$ étant le nombre total de bandes. Elle sera notée $\{e(j)\}$.

On notera que dans l'état de la technique, les décodeurs 22 étaient prévus pour décoder les trames audio issues des terminaux $10_1$ à $10_n$, et pour les traiter, afin de réaliser la synthèse d'un signal temporel qui était alors traité dans le domaine temporel par l'unité de combinaison 21 ce qui n'est pas le cas selon la présente invention où le traitement opéré par l'unité 21 est réalisée dans le domaine fréquentiel. En effet, l'unité de combinaison 21 effectue la recombinaison des trames déquantifiées issues des décodeurs $22_1$ à $22_N$ en sommant tous les coefficients de trans-formée $y^{Ei}(k)$ avec $i \neq m$ et en délivrant, sur chaque sortie $S_m$, de nouveaux coefficients déquantifiés $y^{Sm}$ (k) dont la valeur est donnée par la relation suivante :

$$y^{S_m}(k) = \sum_{i=1, i \neq m}^{N} y^{E_i}(k)$$

Si la trame audio délivrée par les décodeurs $22_1$ à $22_N$ contient un signal d'enveloppe spectrale $\{e(j)\}$, l'unité de combinaison 21 calcule, pour chaque sortie $S_m$, un nouveau signal d'enveloppe spectrale $\{e^{Sm}$ (j)$\}$ en recalculant l'énergie $e^{Sm}$ (j) pour chaque bande $j$ en utilisant la relation suivante :

$$e^{S_m}(j) = \sum_{i=1, i \neq m}^{N} e^{E_i}(j)$$

Eventuellement, l'unité de combinaison 21 détermine les paramètres utilisés pour le choix du type du codage et des caractéristiques de la quantification de l'enveloppe spectrale $\{e^{Sm}(j)\}$.

De plus, la nature voisée/non voisée et la nature tonale/non tonale de la trame à délivrer sur chaque sortie $S_m$ sont déterminées en se basant sur le voisement et l'énergie des signaux correspondant aux trames présentes sur les entrées $E_1$ à $E_N$ qui ont été utilisées pour les construire.

Quant aux recodeurs $23_1$ à $23_N$, ils procèdent de manière inverse à celle des décodeurs partiels $22_1$ à $22_N$ en tenant éventuellement compte du nouveau débit binaire $D_{S_m}$ nécessité pour la voie $m$ considérée.

On a représenté à la Fig. 3 un codeur 30 du type qui pourrait être utilisé en tant que codeur 11 d'un terminal 10 avec le système de la présente invention. On comprendra que la présente invention ne se limite pas à ce type de codeur mais que tout type de codeur audio pouvant délivrer des coefficients de transformée et des paramètres de sélection de quantificateurs pourrait convenir, tel que le codeur normalisé par l'UIT-T sous le nom "G-722.1" ou celui normalisé par l'ISO sous le nom "MPEG-4 AAC". La description qui suit est uniquement faite à titre d'exemple de réalisation.

Les trames $x(n)$ présentes à l'entrée de ce codeur 30 sont d'abord l'objet d'une transformée du domaine temporel vers le domaine fréquentiel, telle qu'une transformée en cosinus discrets modifiée, dans une unité 31 prévue pour délivrer les coefficients de cette transformée $y(k)$. Le codeur 30 comprend encore un détecteur de voisement 32 qui détermine si le signal d'entrée est voisé ou pas et délivre une information binaire de voisement $v$. Il comporte encore un détecteur de tonalité 33 qui évalue à partir des coefficients de transformée délivrés par l'unité 31 si le signal d'entrée $x(n)$ est tonal ou pas et délivre une information binaire de tonalité $t$. Il comporte encore une unité de masquage 34 qui, sur la base des coefficients de transformée délivrés par l'unité 31, délivre ou ne délivre pas une information de masquage selon leur valeur comparée à un niveau seuil prédéterminé.

Sur la base de cette information de masquage délivrée par l'unité 34, mais également sur la base du signal de voisement $v$ et du signal de tonalité $t$, une unité 35 détermine l'énergie $e(j)$ dans chacune des bandes $j$ d'une pluralité de bandes (généralement au nombre de 32) et délivre, quantifié et codé, un signal d'enveloppe spectrale de la trame courante, noté par la suite, du fait qu'il est quantifié, $\{e_q(j)\}$ avec $j = 1$ à $M$, $M$ étant le nombre total de bandes.

Ensuite, pour les bandes de fréquences qui ne sont pas totalement masquées, une allocation dynamique de bits est réalisée, par une unité 36, en vue d'une quantification des coefficients de transformée opérée dans une unité de quantification et de codage 37.

On notera que l'unité 36 d'allocation de bits utilise l'enveloppe spectrale délivrée par l'unité 35.

Les coefficients de transformée sont donc quantifiés dans l'unité 37 qui utilise, pour ce faire ainsi que pour réduire le domaine dynamique de la quantification, lesdits coefficients issus de l'unité 31, l'information de masquage délivrée par l'unité 34 ainsi que l'enveloppe spectrale $\{e_q\,(j)\}$ délivrée par l'unité 35 et le signal d'allocation de bits délivré par l'unité 36.

Les coefficients de transformée quantifiés $y_q(k)$, l'énergie quantifiée dans chaque bande $e_q(j)$, le signal de tonalité $t$, le signal de voisement $v$ sont ensuite multiplexés dans un multiplexeur 38 afin de former des trames audio du signal codé.

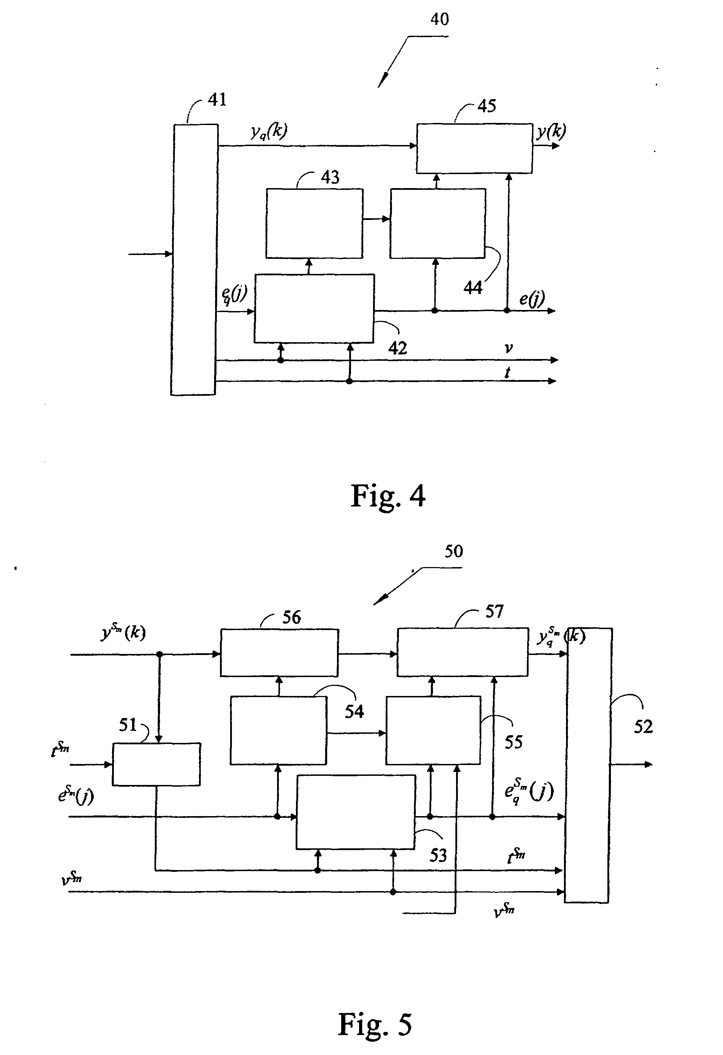

On a représenté à la Fig. 4 le schéma bloc d'un décodeur partiel 40 tel que celui qui est utilisé, en tant que décodeur 22 d'une unité de contrôle multipoint 20 selon l'invention, dans le cas de l'utilisation, au niveau du terminal, d'un codeur tel que celui qui est représenté à la Fig. 3.

Le décodeur partiel 40 représenté à la Fig. 4 est essentiellement constitué d'un démultiplexeur 41 pour démultiplexer les trames d'entrée et ainsi délivrer les coefficients quantifiés $y_q(k)$, l'énergie dans chacune des bandes $e_q$ $(j)$, le signal d'information de voisement $v$ et le signal d'information de tonalité $t$.

Le signal d'énergie $e_q(j)$ dans chacune des bandes est décodé et déquantifié, dans une unité 42 qui utilise pour ce faire les signaux d'information de voisement $v$ et de tonalité $t$. L'énergie $e(j)$ dans chacune des bandes $j$ est délivrée.

Une courbe de masquage par bande est déterminée, par une unité 43, et est utilisée par une unité d'allocation dynamique de bits 44 qui utilise par ailleurs le signal d'énergie $e(j)$ dans chacune des bandes $j$ pour délivrer à une unité de quantification inverse 45 un signal d'allocation dynamique de bits. L'unité de quantification inverse 45 est prévue pour déquantifier chacun des coefficients de transformée $y_q(k)$ et utilise également le signal d'énergie $e(j)$ dans chacune des bandes correspondantes.

Ainsi, le décodeur partiel délivre, pour chaque trame sur son entrée, les coefficients de transformée $y(k)$, les signaux d'énergie $e(j)$ dans chacune des bandes, un signal d'information de voisement $v$ et un signal d'information de tonalité $t$.

L'unité de décodage partiel 40 permet de disposer, pour chaque trame de la voie d'indice $n$ à combiner, de l'ensemble des $K$ coefficients de transformée d'indice $k$ quantifiés $\{y^{E_n}(k)\}$ avec $k = 1$ à $K$, de l'ensemble $\{e^{E_n}(j)\}$ des valeurs quantifiées des énergies dans les $M$ bandes $j$ avec $j = 1$ à $M$, de l'information de tonalité $t^{E_n}$ et de l'information de voisement $v^{E_n}$.

L'unité de combinaison 20 a pour objet, pour une entrée d'indice $n$, de combiner les N-1 autres entrées et de délivrer à la sortie d'indice $n$ le signal résultant de cette combinaison.

Plus précisément, l'opération de combinaison mise en oeuvre par l'unité de combinaison 21 est avantageusement la suivante.

Sont d'abord déterminées des variables intermédiaires qui correspondent à la somme des coefficients de transformée d'indice $k$ $y^{E_n}\,(k)$ pour toutes les entrées $E_n$ et à la somme des énergies $e^{E_n}(j)$ des valeurs quantifiées des énergies dans chaque bande $j$ pour toutes les entrées $E_n$ avec :

$$y(k) = \sum_{n=1}^{N} y^{En}(k), \quad k = 0..K-1$$

$$e(j) = \sum_{n=1}^{N} \left(e^{En}(j)\right)^2, \quad j = 0..M-1$$

Sont ensuite déduites les valeurs correspondant à chaque voie de sortie $S_m$ par soustraction, auxdites variables intermédiaires $y(k)$ et e($j$), des signaux d'entrée de l'entrée d'indice $m$ :

$$y_q^{Sm}(k) = y(k)-y^{Em}(k), \quad k=0...K\text{-}1 \text{ et } m=1..N$$

$$e_q^{Sm}(j) = \sqrt{e(j)\text{-}(e^{Em}(j))^2}, \quad j=0...M\text{-}1 \text{ et } m=1...N$$

On notera que le nombre de bandes M ainsi que le nombre K de coefficients de transformée utilisés dans les calculs ci-dessus dépendent du débit de la voie de sortie considérée. Ainsi par exemple, si le débit pour une voie est de 16 kbits/s, le nombre de bandes est égal à *M* = 26 au lieu de 32.

L'unité de combinaison 21 réalise également la détermination du voisement $v^{S_m}$ de la trame sur chaque sortie *Sm*. Pour se faire, elle se base sur l'état de voisement $v^{E_n}$ des trames des *N* - 1 entrées d'indices *n* ($n \neq m$) ainsi que de leur énergie $e^{E_n}$. Ainsi, si toutes les trames sur les voies d'entrée d'indices *n* ($n \neq m$) sont de même nature (voisée ou non voisée), la trame sur la voie de sortie d'indice *m* est considérée dans le même état. Par contre, si ces trames d'entrée ne sont pas de même nature, alors l'énergie totale de l'ensemble des trames voisées ainsi que l'énergie totale de l'ensemble des trames non voisées sont calculées indépendamment l'une de l'autre. Alors l'état de la trame de la sortie d'indice *m* est le même que celui du groupe de trames dont l'énergie totale ainsi calculée est la plus grande.

On notera que le calcul de l'énergie de chaque trame d'entrée se fait par simple combinaison des énergies de ses bandes obtenues à partir de l'enveloppe spectrale décodée.

L'unité de combinaison 20 réalise également la détermination de la tonalité $t^{S_m}$ de la trame sur chaque sortie $S_m$ si toutes les trames d'entrée d'indice *n* contribuant au calcul de la trame sur la voie de sortie d'indice *m* sont de même nature. Dans ce cas particulier, la trame de sortie d'indice *m* prend le même état de tonalité. Dans le cas contraire, la détermination de la tonalité est reportée à la phase de recodage partiel.

On a représenté à la Fig. 5 le schéma bloc d'une unité de recodage partiel 50 utilisée dans le cas de l'utilisation, en tant que codeur 11 d'un terminal, d'un codeur tel que celui qui est représenté à la Fig. 3.

Le recodeur partiel 50 représenté à la Fig. 5 est prévu pour délivrer, à chaque sortie $S_m$ de l'unité de combinaison 20, des coefficients de transformée $y_q^{S_m}(k)$, des signaux d'énergie $e_q^{S_m}(j)$ dans des bandes *j*, un signal d'information de tonalité $t^{S_m}$ et un signal d'information de voisement $v^{S_m}$.

Le signal d'information de tonalité $t^{S_m}$ sur la sortie d'indice *m* est recalculé au moyen d'une unité 51 qui reçoit, sur une première entrée, le signal d'information de tonalité $t^{S_m}$ de la sortie d'indice *m* lorsque ledit signal a été déterminé par l'unité de combinaison 20 et, sur une seconde entrée, tous les coefficients de transformée $y_q^{S_m}(k)$ pour un nouveau calcul lorsque l'unité de combinaison 20 ne l'a pas effectuée.

Le signal d'information de tonalité $t^{S_m}$ issu de l'unité 51 est délivré sur une entrée d'un multiplexeur 52. Il est également délivré à une unité de codage de l'enveloppe spectrale 53 qui utilise également le signal de voisement $v^{S_m}$ sur la sortie $S_m$ de l'unité 20 pour coder et quantifier les énergies dans toutes les bandes considérées $e_q^{S_m}(j)$. Les signaux d'énergie quantifiés $e_q^{S_m}(j)$ sont délivrés à une entrée du multiplexeur 52.

Les signaux d'énergie (non quantifiés) $e^{S_m}(j)$ sont également utilisés par une unité de détermination de courbes de masquage 54 qui fournit à une unité d'allocation dynamique 55, ainsi qu'à une unité de masquage 56, des signaux de masquage par bandes *j*.

L'unité d'allocation dynamique de bits 55 reçoit également les signaux d'énergie quantifiés $e_q^{S_m}(j)$ et détermine le nombre de bits qui sera utilisé par une unité de re-quantification 57 pour quantifier les coefficients de transformée $y^{S_m}(k)$ qui n'ont pas été masqués par l'unité de masquage 56 et pour délivrer des signaux de coefficients de transformée quantifiés $y_q^{S_m}(k)$ au multiplexeur 52. L'unité de re-quantification 57 utilise également les signaux d'énergie quantifiés $e_q^{S_m}(j)$ dans les bandes *j*.

Le multiplexeur 52 est prévu pour délivrer l'ensemble de ces signaux sous forme d'une trame de sortie.

En vue de réduire la complexité due au processus de quantification vectorielle inverse effectué par l'unité 45 de chaque décodeur 40 puis de la requantification des bandes lors du fonctionnement du recodeur 50, notamment de l'unité 57 du recodeur 50, le procédé de la présente invention utilise une méthode de masquage inter-signaux dans les bandes *j* pour ne garder, si possible, que les coefficients et l'énergie d'un seul signal d'entrée dans une bande donnée. Ainsi, pour la détermination du signal sur la bande *j, j* = 1 à *M*, de la trame présente sur la sortie d'indice *m*, on cherche d'abord parmi toutes les trames *d'entrée* $n \neq m$ celle qui a l'énergie $(e^{E_n}(j))^2$ maximale dans la bande *j* :

$$n_0 = \arg\max_{n \neq m}\left\{\left(e^{E_n}(i)\right)^2\right\}$$

Puis on teste si les coefficients des trames $y^{E_m}(k)$ d'entrée $n \neq m$ et $n \neq n_0$ dans la bande *j* sont tous masqués par le seuil de masquage $S^{E_{n_0}}(j)$ de la trame $n_0$ dans la bande *j*. On notera que ce seuil $S^{E_{n_0}}(j)$ a été déterminé lors de la phase de décodage partiel effectuée par l'unité 44 du décodeur 40.

Ainsi, si les coefficients $y^{E_m}(k)$ sont masqués par le seuil $S^{E_{n_0}}(j)$, c'est-à-dire

Si

$$\left(y^{E_n}(k)\right)^2 < S^{E_{n_0}}(j) \qquad \forall n \neq m, n_0 \text{ et } \forall k \in bande(j)$$

alors :

les coefficients des trames de sortie sont égaux $y^{Sm}(k)$ au coefficient $y^{En_0}(k)$ de la trame d'entrée $n_0$, soit :

$$y^{Sm}(k)= y^{En_0}(k) \text{ pour } k \in bande\ (j)$$

De même, dans ce cas, les énergies $e^{S}m(j)$ des trames de sortie dans ladite bande considérée $j$ sont égales à l'énergie maximale $e^{En}o(j)$, soit

$$e^{Sm}(j)=e^{En}o(j)$$

Les coefficients des bandes de la trame de sortie $m$ ainsi calculés ne sont pas soumis à une procédure de quantification inverse re-quantification complète lors de la phase de recodage partiel.

Si la condition ci-dessus n'est pas remplie, les termes $e^{Sm}(j)$ et $y^{Sm}(k)$ sont donnés par les équations précédentes.

Quand une quantification de type vectoriel algébrique est utilisée pour re-quantifier les coefficients de transformée, le mot de code $m$, transmis pour chaque bande $i$ de la trame d'entrée représente l'index du vecteur quantifié dans un dictionnaire, noté $C(b_i,d_i,)$, de vecteurs leaders quantifiés au nombre de bits $b_i$ et de dimension $d_i$. De ce mot de code $m_i$, on peut extraire le vecteur des signes $sign(i)$, le numéro $L_i$, dans le dictionnaire $C(b_i\ d_i)$, du vecteur leader quantifié le plus proche voisin du vecteur leader $\widetilde{Y}(i)$ et $r_i$ du vecteur quantifié $Yq(i)$ dans la classe du vecteur leader $\widetilde{Y}q(i)$.

Le recodage sur la bande $i$, pour obtenir le mot de code de sortie $m_i'$, se fait alors comme suit.

On décode le mot de $code\ m_i$ de la bande i et on en extrait le numéro $L_i$ du vecteur leader quantifié $\widetilde{Y}q(i)$, le rang $r_i$ et le signe $sign(i)$. Deux cas sont à considérer selon les nombres de bits $b_i$ et $b'_i$ respectivement alloués à la bande $i$ en entrée et en sortie ainsi que la position du vecteur leader quantifié d'entrée par rapport au nouveau dictionnaire $C(b'_i, d_i)$ .

Si le nombre de bits en sortie $b'_i$ est supérieur ou égal aux nombres de bits en entrée $b_i$, alors le mot de code $m'_i$ de la trame de sortie est le même que celui de la trame d'entrée $m_i$. Il en est de même si le nombre de bits en sortie $b'_i$ est inférieur aux nombres de bits en entrée $b_i$ mais qu'en même temps, le numéro $L_i$ du vecteur leader quantifié $\widetilde{Y}q(i)$ est inférieur ou égal au cardinal $NL(b'_i,d_i)$ du dictionnaire utilisé pour la quantification de la trame de sortie. Ainsi :

Si $(b'_i \geq b_i)$ ou $(b'_i < b_i$ et $L_i \leq NL(b'_i, d_i))$ alors $m'_i = m_i$

Dans tous les autres cas, on décode la trame pour retrouver $perm(i)$ (équivalent à déterminer $Y_q(i)$) à partir du numéro $L_i$, et du rang $r_i$. Cette étape peut avoir déjà été mise en œuvre lors de l'opération de décodage partiel.

On recherche alors le vecteur $\widetilde{Y}'q(i)$, dans le dictionnaire $C(b'_i,d_i)$, le plus proche voisin de $\widetilde{Y}q(i)$, $L'_i$ étant son numéro.

On recherche ensuite le rang $r'_i$ de $Y'q(i)$, nouveau vecteur quantifié de $Y(i)$, dans la classe du leader $\widetilde{Y}'q(i)$ en utilisant $perm(i)$. On construit alors le mot de code $m'_i$ de la bande i de la trame de sortie à partir du numéro $L'_i$, du rang $r'_i$ et du $sign(i)$

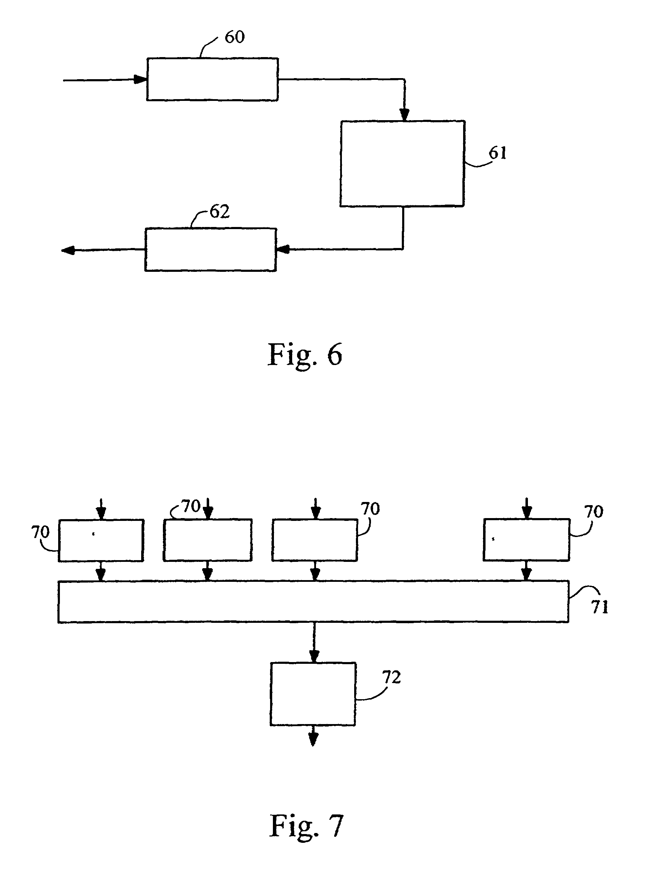

La présente invention trouve également application dans tout processus de traitement de signaux audio numériques. On a représenté à la Fig. 6 un schéma synoptique d'une telle application.

Les signaux codés issus d'un terminal tel qu'un terminal 10 (voir Fig. 1) sont soumis, dans une unité 60, à un décodage partiel, tel que celui qui est opéré dans une unité de décodage 40 (voir également Fig. 4). Les signaux ainsi décodés partiellement sont ensuite soumis, dans une unité 61, au traitement particulier à appliquer. Enfin, après traitement, ils sont recodés dans une unité 62 qui est du type de celle 50 faisant l'objet de la Fig. 5.

Par exemple, le traitement particulier en question est un transcodage audio pour amener des signaux audio codés à un premier débit (par exemple de 24 kbit/s) à un second débit (par exemple de 16 kbit/s). Dans ce cas particulier, le traitement opéré dans l'unité 61 consiste essentiellement à une réallocation des bits basée sur le second débit binaire disponible. On notera que, dans ce cas, la trame en sortie de l'unité 62 contient les mêmes informations latérales de tonalité, de voisement et d'enveloppe spectrale codée que la trame présente à l'entrée de l'unité 60.

On présente, à la Fig. 7, le schéma synoptique d'un terminal de téléconférence en architecture maillée. Il comprend autant de décodeurs partiels 70 que d'entrées pour les trames issues des autres terminaux. Ces décodeurs partiels 70 ont leurs sorties qui sont respectivement reliées aux entrées d'une unité de combinaison 71, laquelle délivre alors une trame somme dans le domaine fréquentiel. Cette trame est alors transformée dans le domaine temporel par une unité 72 qui délivre un signal audio numérique.

**Revendications**

1. Procédé de mise en oeuvre d'un traitement d'au moins un flux audio binaire codé organisé sous la forme de trames formées à partir de signaux audio numériques qui ont été codés par au moins un terminal audio afin de délivrer des trames traitées à une étape ultérieure d'utilisation, ledit codage desdits signaux audio numériques comprenant d'abord la transformation desdits signaux audio numériques du domaine temporel vers le domaine fréquentiel afin de calculer des coefficients de transformée, puis une étape de quantification et de codage desdits coefficients de transformée selon un jeu de quantificateurs, lesdites trames contenant lesdits coefficients de transformée ainsi codés, **caractérisé en ce que**

   - le jeu de quantificateurs est déterminé à partir de paramètres de sélection extraits desdits signaux audio numériques, lesdites trames contenant en outre lesdits paramètres de sélection, et

      **en ce que** ledit procédé comprend, pour au moins un flux audio reçu d'un terminal, les étapes suivantes de :

   - obtention des paramètres de sélection à partir desdites trames dudit flux audio et détermination à partir desdits paramètres de sélection du jeu de quantificateurs qui avaient été utilisés durant l'étape de quantification réalisé par ledit terminal,
   - décodage partiel et déquantification desdites trames en utilisant le jeu de quantificateurs déterminé à l'étape précédente afin de recouvrir les valeurs déquantifiées des coefficients de transformée qui avaient été calculés par ledit terminal,
   - mise en oeuvre dudit traitement proprement dit dans le domaine fréquentiel sur les coefficients de transformée déquantifiés obtenus à l'étape précédente afin de produire des trames traitées,
   - délivrance desdites trames traitées à ladite étape d'utilisation ultérieure.

2. Procédé de mise en oeuvre d'un traitement d'au moins un flux binaire audio codé selon la revendication 1, **caractérisé en ce que** ladite étape ultérieure d'utilisation consiste à recoder partiellement lesdites trames ainsi traitées en une étape de re-quantification et re-codage desdits coefficients de transformée ainsi traités.

3. Procédé de mise en oeuvre d'un traitement d'au moins un flux binaire audio codé selon la revendication 2, **caractérisé en ce que** ledit traitement consiste à sommer les coefficients de transformée issus du décodage partiel des trames appartenant à des flux de trames produites par une pluralité de terminaux audio et à fournir, à l'étape de re-codage, le résultat de ladite sommation.

4. Procédé de mise en oeuvre d'un traitement d'au moins un flux binaire audio codé selon la revendication 3 destiné à être mis en oeuvre dans un système d'audioconférence à plusieurs terminaux, **caractérisé en ce que** ledit traitement consiste à sommer les coefficients de transformée déquantifiés obtenus par l'étape de décodage partiel desdits trames appartenant à des flux de trames en provenance d'une pluralité de terminaux audio, à soustraire auxdits coefficients sommés les coefficients de transformée déquantifiés issus du décodage partiel du flux de trames en provenance d'un desdits terminaux audio et à fournir le résultat ainsi obtenu à ladite étape ultérieure d'utilisation concernant ledit terminal audio.

5. Procédé de mise en oeuvre d'un traitement d'au moins un flux binaire audio codé selon une des revendications 1 à 3, **caractérisé en ce que** ladite étape ultérieure d'utilisation est une étape de transformée du domaine fréquentiel vers le domaine temporel en vue de la restitution du signal audio.

6. Procédé de mise en oeuvre d'un traitement d'au moins un flux binaire audio codé selon la revendication 5 destiné à être mis en oeuvre dans un système d'audioconférence à plusieurs terminaux, **caractérisé en ce que** ledit traitement consiste à sommer les coefficients de transformée respectivement issus des décodages partiels desdits flux de trames en provenance desdits terminaux.

7. Procédé de mise en oeuvre d'un traitement d'au moins un flux binaire audio codé selon une des revendications précédentes, **caractérisé en ce que** les valeurs desdits paramètres de sélection du jeu de quantificateurs sont également soumises audit traitement.

8. Procédé de mise en oeuvre d'un traitement d'au moins un flux binaire audio codé selon la revendication 7, dans lequel lesdits paramètres de sélection du jeu de quantificateurs contenus dans lesdites trames audio du flux ou de chaque flux est l'ensemble des valeurs des énergies des signaux audio dans des bandes de fréquence prédéterminées, ensemble dit enveloppe spectrale, **caractérisé en ce que** ledit traitement consiste à sommer les coefficients de transformée issus du décodage partiel de chacun desdits flux de trames et à fournir, à l'étape de re-codage, le résultat de ladite sommation et **en ce qu'**il consiste à déterminer l'énergie totale dans chaque bande de fréquence par sommation des énergies des trames et à fournir, à l'étape de re-codage, le résultat de ladite sommation

9. Procédé de mise en oeuvre d'un traitement d'au moins un flux binaire audio codé selon la revendication 8 destiné à être mis en oeuvre dans un système d'audioconférence à plusieurs terminaux, **caractérisé en ce que** ledit traitement consiste à sommer les coefficients de transformée issus du décodage partiel de chacun desdits flux de trames respectivement en provenance desdits terminaux et à fournir, à l'étape de re-codage affecté à un terminal, le résultat de ladite sommation auquel sont soustraits les coefficients de transformée issus du décodage partiel du flux de trames en provenance dudit terminal et **en ce qu'**il consiste à déterminer l'énergie totale dans chaque bande de fréquence par sommation des énergies des trames en provenance desdits terminaux et à fournir, à l'étape de re-codage affecté à un terminal, le résultat de ladite sommation auquel est soustraite l'énergie issue de la trame en provenance dudit terminal.

10. Procédé de mise en oeuvre d'un traitement d'au moins un flux binaire audio codé selon une des revendications précédentes, lesdites trames audio du flux ou de chaque flux contiennent une information de voisement du signal audio correspondant, **caractérisé en ce que** ledit traitement détermine l'information de voisement du signal audio résultant dudit traitement.

11. Procédé de mise en oeuvre d'un traitement d'au moins un flux binaire audio codé selon la revendication 10, **caractérisé en ce que** pour déterminer l'information de voisement du signal audio résultant dudit traitement, il consiste, si toutes les trames de tous les flux ont le même état de voisement, à considérer cet état de voisement comme l'état du signal audio résultant dudit traitement, et, dans le cas contraire, à déterminer l'énergie totale de l'ensemble des signaux audio des trames voisées et l'énergie de l'ensemble des signaux audio des trames non-voisées, puis à considérer l'état de voisement de l'ensemble dont l'énergie est la grande comme étant l'état de voisement du signal audio résultant dudit traitement.

12. Procédé de mise en oeuvre traitement d'au moins un flux binaire audio codé selon la revendication 1 à 11, lesdites trames audio du flux ou de chaque flux contiennent une information de tonalité du signal audio correspondant, **caractérisé en ce que** ledit traitement détermine, si toutes les trames sont de même nature, l'information de tonalité du signal audio résultant dudit traitement comme étant l'état des signaux desdites trames.

13. Procédé de mise en oeuvre d'un traitement d'au moins un flux binaire audio codé selon une des revendications précédentes, **caractérisé en ce qu'**il consiste à chercher parmi toutes les trames à traiter celle qui a l'énergie maximale dans une bande donnée, et égaler les coefficients de la trame de sortie au coefficient de ladite trame dans ladite bande si les coefficients des trames d'entrée autres que celle qui a l'énergie maximale dans une bande donnée sont masqués par le seuil de masquage de ladite trame dans ladite bande.

14. Procédé de mise en oeuvre d'un traitement d'au moins un flux binaire audio codé selon la revendication 13, **caractérisé en ce que** les énergies de la trame de sortie dans ladite bande sont égalées à l'énergie maximale de ladite trame d'entrée dans ladite bande.

15. Procédé de mise en oeuvre d'un traitement d'au moins un flux binaire audio codé selon une des revendications précédentes, ladite étape de re-quantification est une quantification vectorielle à dictionnaires imbriqués en taille, **caractérisé en ce que**, si le dictionnaire correspondant en entrée à la bande est inclus dans le dictionnaire sélectionné en sortie, ou dans le cas contraire où le dictionnaire de sortie est inclus dans le dictionnaire d'entrée mais que le vecteur quantifié, élément du dictionnaire d'entrée est aussi un élément du dictionnaire de sortie, le mot de code de la bande en sortie est égal au mot de code de la bande en entrée, sinon le processus de quantification inverse puis re-quantification dans le dictionnaire de sortie est mis en oeuvre.

16. Procédé de mise en oeuvre d'un traitement d'au moins un flux binaire audio codé selon la revendication 15, ladite étape de re-quantification étant une quantification vectorielle à dictionnaires imbriqués en taille, les dictionnaires étant composés d'union de codes à permutation, **caractérisé en ce que**, si le dictionnaire correspondant en entrée à la bande est inclus dans le dictionnaire sélectionné en sortie, ou dans le cas contraire où le dictionnaire de sortie est inclus dans le dictionnaire d'entrée mais que le vecteur quantifié, élément du dictionnaire d'entrée est aussi un élément du dictionnaire de sortie, le mot de code de la bande en sortie est égal au mot de code de la bande en entrée, sinon le processus de quantification inverse puis re-quantification dans le dictionnaire de sortie est mis en oeuvre, la procédure de requantification étant avantageusement accélérée **en ce que** le plus proche voisin du leader d'un vecteur du dictionnaire d'entrée est un leader du dictionnaire de sortie.

**17.** Appareil pour la mise en oeuvre d'un traitement d'au moins un flux binaire audio codé comprenant des moyens pour mettre en oeuvre chacune des étapes d' un procédé selon une des revendications précédentes.

**Patentansprüche**

**1.** Verfahren für die Ausführung einer Bearbeitung wenigstens eines codierten digitalen Audiodatenstroms, der in Form von Rahmen organisiert ist, die aus digitalen Tonsignalen gebildet sind, die von wenigstens einer Audio-Endeinrichtung codiert worden sind, um die bearbeiteten Rahmen einem nachfolgenden Verwendungsschritt zu übergeben, wobei die Codierung der digitalen Tonsignale zunächst die Transformation der digitalen Tonsignale aus dem Zeitbereich in den Frequenzbereich umfasst, um die Transformationskoeffizienten zu berechnen, und dann einen Schritt der Quantisierung und Codierung der Transformationskoeffizienten gemäß einem Satz Quantisierer umfasst, wobei die Rahmen die auf diese Weise codierten Transformationskoeffizienten enthalten, **dadurch gekennzeichnet, dass**

- der Satz Quantisierer anhand von Auswahlparametern bestimmt wird, die aus den digitalen Tonsignalen gewonnen werden, wobei die Rahmen außerdem die Auswahlparameter enthalten, und

dass das Verfahren für wenigstens einen Audiodatenstrom, der von einer Endeinrichtung empfangen wird, die folgenden Schritte umfasst:

- Gewinnen der Auswahlparameter aus den Rahmen des Audiodatenstroms und anhand der Auswahlparameter Bestimmen des Satzes Quantisierer, die während des von der Endeinrichtung durchgeführten Quantisierungsschritts verwendet wurden,
- teilweises Decodieren und Dequantisieren der Rahmen unter Verwendung des im vorhergehenden Schritt ermittelten Satzes Quantisierer, um die dequantisierten Werte der Transformationskoeffizienten, die von der Endeinrichtung berechnet wurden, abzudecken,
- Anwenden der eigentlichen Bearbeitung im Frequenzbereich auf die dequantisierten Transformationskoeffizienten, die im vorhergehenden Schritt erhalten worden sind, um bearbeitete Rahmen zu erzeugen,
- Übergeben der bearbeiteten Rahmen an den nachfolgenden Verwendungsschritt.

**2.** Verfahren für die Ausführung einer Bearbeitung wenigstens eines codierten digitalen Audiodatenstroms nach Anspruch 1, **dadurch gekennzeichnet, dass** der nachfolgende Verwendungsschritt umfasst, die so bearbeiteten Rahmen in einem Schritt der Umquantisierung und Umcodierung der so bearbeiteten Transformationskoeffizienten teilweise umzucodieren.

**3.** Verfahren für die Ausführung einer Bearbeitung wenigstens eines codierten digitalen Audiodatenstroms nach Anspruch 2, **dadurch gekennzeichnet, dass** die Bearbeitung umfasst, die Transformationskoeffizienten, die aus der teilweisen Decodierung der Rahmen hervorgegangen sind, die Rahmenströmen angehören, die von mehreren Audio-Endeinrichtungen erzeugt sind, zu summieren und das Ergebnis der Summation an den Umcodierungsschritt zu liefern.

**4.** Verfahren für die Ausführung einer Bearbeitung wenigstens eines codierten digitalen Audiodatenstroms nach Anspruch 3, das dafür bestimmt ist, in einem Fernsprechkonferenzsystem mit mehreren Endeinrichtungen benutzt zu werden, **dadurch gekennzeichnet, dass** die Bearbeitung umfasst, die dequantisierten Transformationskoeffizienten, die durch den Schritt der teilweisen Decodierung der Rahmen erhalten worden sind, die Rahmenströmen angehören, die von mehreren Audio-Endeinrichtungen kommen, zu summieren, von den summierten Koeffizienten die dequantisierten Transformationskoeffizienten, die aus der teilweisen Decodierung des Rahmenstroms hervorgegangen sind, der von einer der Audio-Endeinrichtungen kommt, zu subtrahieren und das auf diese Weise erhaltene Ergebnis an den nachfolgenden Verwendungsschritt, der die Audio-Endeinrichtung betrifft, zu liefern.

**5.** Verfahren für die Ausführung einer Bearbeitung wenigstens eines codierten digitalen Audiodatenstroms nach einem der Ansprüche 1 bis 3, **dadurch gekennzeichnet, dass** der nachfolgende Verwendungsschritt ein Schritt der Transformation aus dem Frequenzbereich in den Zeitbereich mit dem Ziel der Wiedergabe des Tonsignals ist.

**6.** Verfahren für die Ausführung einer Bearbeitung wenigstens eines codierten digitalen Audiodatenstroms nach Anspruch 5, das dazu bestimmt ist, in einem Fernsprechkonferenzsystem mit mehreren Endeinrichtungen benutzt zu werden, **dadurch gekennzeichnet, dass** die Bearbeitung umfasst, die Transformationskoeffizienten, die jeweils aus den teilweisen Decodierungen der von den Endeinrichtungen kommenden Rahmenströme hervorgegangen sind, zu summieren.

**7.** Verfahren für die Ausführung einer Bearbeitung wenigstens eines codierten digitalen Audiodatenstroms nach einem der vorhergehenden Ansprüche, **dadurch gekennzeichnet, dass** die Werte der Parameter für die Auswahl des Satzes Quantisierer ebenfalls der Bearbeitung unterworfen werden.

**8.** Verfahren für die Ausführung einer Bearbeitung wenigstens eines codierten digitalen Audiodatenstroms nach Anspruch 7, bei dem die Parameter für die Auswahl des Satzes Quantisierer, die in den Audiodatenrahmen des Stroms oder jedes Stroms enthalten sind, die Gesamtheit der Energiewerte der Tonsignale in im Voraus festgelegten Frequenzbändern sind, wobei die Gesamtheit als spektrale Einhüllende bezeichnet wird, **dadurch gekennzeichnet**, das die Bearbeitung umfasst, die Transformationskoeffizienten, die aus der teilweisen Decodierung jedes Rahmenstroms hervorgegangen sind, zu summieren und das Ergebnis der Summation an den Schritt der Umcodierung zu liefern, und dass sie umfasst, die Gesamtenergie in jedem Frequenzband durch Summieren der Energien der Rahmen zu bestimmen und das Ergebnis der Summation an den Schritt der Umcodierung zu liefern.

**9.** Verfahren für die Ausführung einer Bearbeitung wenigstens eines codierten digitalen Audiodatenstroms nach Anspruch 8, das dafür bestimmt ist, in einem Fernsprechkonferenzsystem mit mehreren Endeinrichtungen benutzt zu werden, **dadurch gekennzeichnet, dass** die Bearbeitung umfasst, die Transformationskoeffizienten, die aus der teilweisen Codierung jedes der Rahmenströme hervorgegangen sind, die jeweils von den Endeinrichtungen kommen, zu summieren und an den Schritt der einer Endeinrichtung zugeordneten Umcodierung das Ergebnis der Summation zu liefern, von dem die Transformationskoeffizienten, die aus der teilweisen Decodierung des von der Endeinrichtung kommenden Rahmenstroms hervorgegangen sind, subtrahiert werden, und dass sie umfasst, die Gesamtenergie in jedem Frequenzband durch Summieren der Energien der von den Endeinrichtungen kommenden Rahmen zu bestimmen und an den Schritt der einer Endeinrichtung zugeordneten Umcodierung das Ergebnis der Summation zu liefern, von dem die Energie, die aus dem Rahmen hervorgegangen ist, der von der Endeinrichtung kommt, subtrahiert wird.

**10.** Verfahren für die Ausführung einer Bearbeitung wenigstens eines codierten digitalen Audiodatenstroms nach einem der vorhergehenden Ansprüche, wobei die Audiodatenrahmen des Stroms oder jedes Stroms eine Information zum Stimmhaftmachen des entsprechenden Tonsignals enthalten, **dadurch gekennzeichnet, dass** die Bearbeitung die Information zum Stimmhaftmachen des Tonsignals bestimmt, das durch die Bearbeitung entsteht.

**11.** Verfahren für die Ausführung einer Bearbeitung wenigstens eines codierten digitalen Audiodatenstroms nach Anspruch 10, **dadurch gekennzeichnet, dass** es hinsichtlich der Bestimmung der Information zum Stimmhaftmachen des aus der Bearbeitung entstehenden Tonsignals umfasst, wenn alle Rahmen aller Ströme den gleichen Zustand der Stimmhaftigkeit aufweisen, diesen Zustand der Stimmhaftigkeit als Zustand des durch die Bearbeitung entstehenden Tonsignals zu betrachten, und andernfalls die Gesamtenergie aus der Gesamtheit der Tonsignale der Obertöne aufweisenden Rahmen und die Energie der Gesamtheit der Tonsignale der keine Obertöne aufweisenden Rahmen zu bestimmen, dann den Zustand der Stimmhaftigkeit der Gesamtheit zu betrachten, deren Energie die Größe wie im Zustand der Stimmhaftigkeit des aus der Bearbeitung entstehenden Tonsignals hat.

**12.** Verfahren für die Ausführung einer Bearbeitung wenigstens eines codierten digitalen Audiodatenstroms nach einem der Ansprüche 1 bis 11, bei dem die Audiodatenrahmen des Stroms oder jedes Stroms eine Information über den Klangcharakter des entsprechenden Audiodatensignals enthalten, **dadurch gekennzeichnet, dass** die Bearbeitung, wenn alle Rahmen von der gleichen Art sind, die Information über den Klangcharakter des aus der Bearbeitung entstehenden Tonsignals als Zustand der Signale der Rahmen bestimmt.

**13.** Verfahren für die Ausführung einer Bearbeitung wenigstens eines codierten digitalen Audiodatenstroms nach einem der vorhergehenden Ansprüche, **dadurch gekennzeichnet, dass** es umfasst, unter allen zu bearbeitenden Rahmen jenen zu suchen, der in einem gegebenen Band die maximale Energie aufweist, und die Koeffizienten des Ausgangsrahmens an den Koeffizienten des Rahmens in dem Band anzugleichen, wenn die Koeffizienten der Eingangsrahmen, die von jenem, der die maximale Energie in einem vorgegebenen Band aufweist, verschieden sind, durch die Mithörschwelle des Rahmens in dem Band verdeckt sind.

**14.** Verfahren für die Ausführung einer Bearbeitung wenigstens eines codierten digitalen Audiodatenstroms nach Anspruch 13, **dadurch gekennzeichnet, dass** die Energien des Ausgangsrahmens in dem Band an die Maximalenergie des Eingangsrahmens in dem Band angeglichen werden.

**15.** Verfahren für die Ausführung einer Bearbeitung wenigstens eines codierten digitalen Audiodatenstroms nach einem der vorhergehenden Ansprüche, wobei der Schritt der Umquantisierung eine Vektorquantisierung mit größenverschachtelten Wörterbüchern ist, **dadurch gekennzeichnet, dass**, wenn das entsprechende Wörterbuch am Eingang des Bands in dem ausgewählten Wörterbuch am Ausgang enthalten ist, oder im gegenteiligen Fall, wenn das Ausgangswörterbuch in dem Eingangswörterbuch enthalten ist, aber der quantifizierte Vektor, Element des Eingangswörterbuchs, auch ein Element des Ausgangswörterbuchs ist, das Codewort des Bands am Ausgang gleich dem Codewort des Bands am Eingang ist, andernfalls das Umkehrverfahren der Quantisierung und anschließend die Umquantisierung in dem Ausgangswörterbuch ausgeführt wird.

**16.** Verfahren für die Ausführung einer Bearbeitung wenigstens eines codierten digitalen Audiodatenstroms nach Anspruch 15, bei dem der Schritt der Umquantisierung eine Vektorquantifizierung mit größenverschachtelten Wörterbüchern ist, wobei die Wörterbücher aus einer Vereinigung von Permutationscodes zusammengestellt sind, **dadurch gekennzeichnet, dass**, wenn das entsprechende Wörterbuch am Eingang des Bands in dem ausgewählten Wörterbuch am Ausgang enthalten ist, oder im gegenteiligen Fall, wenn das Ausgangswörterbuch in dem Eingangswörterbuch enthalten ist, aber der quantisierte Vektor, Element des Eingangswörterbuchs, außerdem ein Element des Ausgangswörterbuchs ist, das Codewort des Bands am Ausgang dem Codewort des Bands am Eingang gleich ist, andernfalls das Umkehrverfahren der Quantisierung und dann die Umquantisierung in dem Ausgangswörterbuch ausgeführt wird, wobei das Umquantisierungsverfahren vorteilhaft dadurch beschleunigt wird, dass der nächste Nachbar des führenden Elements eines Vektors des Eingangswörterbuchs ein führendes Element des Ausgangswörterbuchs ist.

**17.** Vorrichtung für die Ausführung einer Bearbeitung wenigstens eines codierten digitalen Audiodatenstroms, die Mittel umfasst, um jeden der Schritte eines Verfahrens gemäß einem der vorhergehenden Ansprüchen auszuführen.

## Claims

**1.** Process for the implementation of a treatment of at least one coded binary audio flux arranged in the form of frames using numeric audio signals, which have been coded by at least one audio terminal so as to produce frames processed at a later stage of use, the said coding of the aforesaid numeric audio signals consisting first of the transformation of the said numeric audio signals from the time domain into the frequency domain in order to calculate the transform coefficients, followed by a stage of quantification and coding of the said transform coefficients in accordance with a set of quantifiers, the said frames containing the said transform coefficients thus coded, **characterised in that**

- the set of quantifiers is determined from selection parameters extracted from the said numeric audio signals, the said frames also containing the said selection parameters, and

**in that** the said process includes, for at least one received audio flux from a terminal, the following stages of:

- the obtaining of selection parameters from the said frames of the said audio flux and determination from the said selection parameters of the set of quantifiers which were used during the quantification stage undertaken by the said terminal,
- partial decoding and dequantification of the said frames using the set of quantifiers determined at the preceding stage in order to recover the dequantified values of the transform coefficients which have been calculated by the said terminal,
- implementation of the treatment strictly speaking within the frequency domain on the dequantified transform coefficients obtained at the preceding stage in order to produce the processed frames,
- supply of the said frames to the said subsequent user stage.

**2.** Process for the implementation of a treatment of at least one coded binary audio flux according to claim 1, **characterised in that** the said later stage of use consists of partially recoding the thus treated said frames and a stage of requantification and recoding of the said transform coefficients thus processed.

3. Process for the implementation of a treatment of at least one coded binary audio flux according to claim 2, **characterised in that** the said treatment consists of summing the transform coefficients resulting from the partial decoding of the frames belonging to the flux of frames produced by a plurality of audio terminals and of making available, at the recoding stage, the result of the said summation.

4. Process for the implementation of a treatment of at least one coded binary audio flux according to claim 3 for the purpose of being used in a multi-terminal audioconference system, **characterised in that** the said treatment consists of summing the dequantified transform coefficients obtained by the partial decoding stage of the said frames belonging to the flux of frames originating from a plurality of audio-terminals, of subtracting from the summed coefficients the dequantified transform coefficients coming from the partial decoding of the frame flux originating from the said audio terminals and of supplying the result thus obtained to the said later stage of use regarding the said audio terminal.

5. Process for the implementation of a treatment of at least one coded binary audio flux according to claims 1 to 3, **characterised in that** the said later stage of use is a transformation stage from the frequency domain to the time domain in order to obtain restitution of the audio signal.

6. Process for the implementation of a treatment of at least one coded binary audio flux according to claim 5 intended for use in a multiple terminal audioconference system, **characterised in that** the said treatment consists of summing the transform coefficients stemming from the partial decoding of the said frame flux respectively originating from the said terminals.

7. Process for the implementation of a treatment of at least one coded binary audio flux according to one of the preceding claims, **characterised in that** the values of the said selection parameters of the set of quantifiers are also subjected to the said treatment.

8. Process for the implementation of a treatment of at least one coded binary audio flux according to claim 7, in which the said selection parameters of the set of quantifiers contained within the said flux audio frames or of each flux is the collection of the values of the audio signal power in predetermined frequency bands, set called a spectral envelope, **characterised in that** the said treatment consists of summing the transform coefficients stemming from partial decoding of each of the said flux of frames, and of providing, at the recoding stage, the result of the said summation and insofar as it consists of determining the total power in each frequency band by the summation of the power of the frames and of providing, at the recoding stage, the result of the said summation.

9. Process for the implementation of a treatment of at least one coded binary audio flux according to claim 8 intended for use in a multiple terminal audioconference system, **characterised in that** the said treatment consists of summing the transform coefficients resulting from the partial decoding of each of the said flux of frames originating respectively from the said terminals and of supplying, at the recoding stage allotted to a terminal, the result of the said summation to which the transform coefficients coming from the partial decoding of the flux of frames from the said terminal is subtracted and **in that** it consists of determining the total power in each frequency band by summation of the frame powers coming from the said terminals and of supplying, at the recoding stage allotted to a terminal, the result of the said summation from which the power stemming from the frame originating from the said terminal is subtracted.

10. Process for the implementation of a treatment of at least one coded binary audio flux according to one of the preceding claims, the said audio frames of the flux or of each flux contain voicing information from the corresponding audio signal, **characterised in that** the said treatment determines the voicing information of the audio signal resulting from the said treatment.

11. Process for the implementation of a treatment of at least one coded binary audio flux according to claim 10, **characterised in that** in order to determine the audio signal voicing information resulting from the said treatment, it consists, if all the frames of all the fluxes have the same voicing state, of regarding this voicing state as the state of the audio signal resulting from the said treatment and, in the opposite case, of determining the total power of all the audio signals of the voiced frames and all the audio signals of the non-voiced frames, then of considering the voicing state of the whole, the power of which is high; it being the voicing state of the audio signal resulting from the said treatment.

12. Process for the implementation of a treatment of at least one coded binary audio flux according to claims 1 to 11, the said audio frames of the flux, or of each flux, contain information on the tonality of the corresponding audio signal, **characterised in that** the said treatment determines, if all the frames are of the same type, the tonality information of the audio signal resulting from the said treatment as being the state of the signals of the said frame.

13. Process for the implementation of a treatment of at least one coded binary audio flux according to one of the preceding claims, **characterised in that** it consists of looking among all the frames for processing that which has maximum power in a given band and of matching the output frame coefficients to the coefficient of the said frame in the said band, if the input frame coefficients other than those which have maximum power in a given band are masked by the masking threshold of the said frame in the said band.

14. Process for the implementation of a treatment of at least one coded binary audio flux according to claim 13, **characterised in that** the powers of the output frame in the said band are matched to the maximum power of the said input frame in the said band.

15. Process for the implementation of a treatment of at least one coded binary audio flux according to one of the preceding claims, the said requantification stage is a vectorial quantification to dictionaries overlapping in size, **characterised in that** if the dictionary corresponding at entry to the band is included in the dictionary selected at output, or conversely, where the output dictionary is included in the input dictionary but that the quantified vector, a component of the input dictionary, is also a component of the output dictionary, the code word of the output band is equal to the code word of the input band, if not the process of inverse quantification then re-quantification in the output dictionary is implemented.

16. Process for the implementation of a treatment of at least one coded binary audio flux according to claim 15, the said re-quantification stage being a vectorial quantification with dictionaries overlapping in size, the dictionaries being composed of a permutated combination of codes, **characterised in that**, if the dictionary corresponding at entry to the band is included in the dictionary selected at output, or conversely, where the output dictionary is included in the input dictionary but that the quantified vector. a component of the input dictionary is also a component of the output dictionary, the code word of the output band is equal to the code word of the input band, if not the process of inverse quantification then re-quantification in the output dictionary is implemented, the requantification procedure being accelerated to advantage **in that** the nearest neighbour to the leader of an input dictionary vector is a leader of the output dictionary.

17. Apparatus for the implementation of a treatment of at least one coded binary audio flux consisting of the means to implement each of the stages of a process according to one of the preceding claims.

Fig. 1

Fig. 2

Fig. 3

Fig. 4

Fig. 5

Fig. 6

Fig. 7